# EUROPEAN PATENT APPLICATION

(11) **EP 2 343 658 A1**
(43) Date of publication of application: **13.07.2011**
(21) Application number: 09015733.0
(22) Date of filing: 18.12.2009
(51) Int. Cl.: G06F 17/30

(54) **Federation as a process**

(71) Applicant: Siemens IT Solutions and Services GmbH, 81739 München (DE)
(72) Inventor: Kalinowski, Simon, 91054 Erlangen (DE); Rusitschka, Sebnem, 81543 München (DE); Schwarz, Stefan, 91325 Adelsdorf (DE)

(57) **Abstract**

A computerized method, system and computer readable medium for federating application data for application services in a distributed software system comprising local data bases providing the application data, wherein a local data base having a local data schema and wherein the federation is accomplished by a federation process, advantageously a lightweight process. This federation-as-a-process approach is especially useful in agile software environments (facing a high rate of mergers and acquisitions) and in service oriented software architectures (SOA).

## Description

### Field of the Invention

The invention generally relates to a method, a system, and a computer readable medium for federating application data for application services in a distributed software system comprising local data bases with respective local data schemata and for providing the application data.

### Background of the invention

The invention relates to federated queries in a distributed software environment. Distributed software environments comprise components (e.g. data bases) and application services which are often autonomous and heterogenous. Today service oriented architecture (SOA) design techniques and approaches intensify this issue. Autonomy of data in service oriented architectures supports the independence of services from each other. As a result, each service can be independently recoded, redeployed, or completely replaced by another service (e.g. provided by a 3ra party supplier).

In software systems or software architectures comprising autonomous and heterogenous components it is a challenge to keep these components and the respective data consolidated, consistent and up to date.

The US patent application US2009/0234799A1 discloses methods and techniques for performing federated queries based on federated data base systems and federated data base server. Such approaches using Federated Data Base Management Systems (FDBMS) are completely centered around database interoperability are time-consuming and need a lot of processing power which impairs the use in service oriented architectures (SOA).

The object of the present invention is to disclose a method and a system for federating application data for application services in a distributed software system which enables an agile technique of transiently federating dispersed data sources until they are consolidated.

### Summary of the invention

The invention may be implemented using hardware or software.

One aspect of the present invention is a method for federating application data for application services in a distributed software system comprising local data bases providing the application data, wherein a local data base having a local data schema, the method comprising the following steps:
normalizing and mapping the descriptions of the application data in a common information model representation, wherein a federation process is adapted to accept a query of an application service to the common information model;
locating the application data belonging to the query of an application service into the respective local data base by the federation process;
mapping the application data belonging to the query from the common information model representation into the local data schema of the respective local data base, wherein the mapping is performed by the federation process;
responding to the query in the respective local data schema of the respective local data base;
receiving the response to the query by the federation process;
remapping of the application data of the query from the respective local data schema into the common information model representation by the federation process; and
responding to the query of the application service in accordance with the common information model representation by the federation process. This federation-as-a-process approach allows for streamlining the federation development; if deployed fully automatically or as a semi-automated framework or along with a developer guideline, it can considerably reduce nonconformity. Recurring process steps and the associated code can be reused, hence federation-as-a-process allows for future automation. The process execution can be logged and traced. The log-file can be used for further optimization. The federation-as-a-process can be instantiated anywhere near the federation hotspots, however it is crucial that all the information is interlinked and up-to-date, i.e. via a federation development repository. Another approach to federate dispersed and autonomous data sources is to use Federated Database Management Systems (FDBMS). However, the approach taken in FDBMS is completely centered around database interoperability and static since at run-time only the information provided during development can be utilized, unless the process steps are made parameterizable and meta-information is made dynamically accessible, but this is causing overhead and decreases the performance. Therefore in agile and dynamic environments FDBMS based federation approaches provide disadvantages regarding access times and response times.

A first embodiment of the invention is that the federation process is implemented as a lightweight process. Lightweight processes are faster and use less resources than full-blown processes used e.g. in Federated Database Management Systems (FDBMS). If the process execution is logged, future developments can use such lightweight persistency for global transaction rollback according to the X/A specification according the Open Group for distributed transaction processing (DTP). Therefore multiple resources (such as databases, application servers, message queues, etc.) can be accessed within the same transaction in a time and resource efficient manner.

A second embodiment of the invention is that the federation process controls the query execution and the presentment returned by the local data base. This means that the federation process has full control over the federated query execution and the presentment of the results returned from remote sources (e.g. data bases). A process step either defines the query to one remote source or the presentment of the result set returned from the remote source. The entire process with transition links from one process step to the next represents the federated query execution. At each transition link rules may be added to control the presentment of the result set of one execution step as input into the next execution step

A further embodiment of the invention is that the query generated by the federation process is a sequential federated query or a parallel federated query. Both parallel and sequential execution of a federated query can be realized for example by using process specification techniques. Federation as a process is very similar to the graphical representation execution plan a federated database management system uses to execute federated queries. Therefore processes for sequential and parallel federated queries can be easily designed and implemented.

A further embodiment of the invention is that the distributed software system is a cloud computing system. Cloud computing typically comprises the provision of dynamically scalable resources or service over the Internet. This requires agility and postulates approaches which can react in a speedy manner regarding queries and data accesses. The federation-as-a-process approach allows for streamlined, fast and resource saving federation.

A further embodiment of the invention is that the distributed software system is implemented according a service oriented architecture (SOA). The majority of today's SOA design techniques are centered around definition of services. They use service-oriented decomposition, based on the business processes, enterprise business/functional model, required long term architectural goals and reuse of the existing enterprise functionality. However the data that these services are operating on is mostly viewed from the consumer perspective and rarely reflects data autonomy. Hence, the most prevailing challenge of a service oriented architecture is the quality of the consumed data, which in most cases originates from another application. One of the largest challenges is to deal with explicit boundaries and autonomy. Explicit boundaries define what is inside a service and what is outside a service. A service is comprised of code and data The code and data of different services are disjoint and data from one service is kept private from the data of another service. Autonomy assures the independence of services from each other. As a result, each service is free to be recoded, redeployed, or completely replaced independent of the other service. In order to enhance services interoperability, the architecture defines a common model of enterprise-wide business objects, used for the services interface definitions. This common model is typically derived from the same enterprise business model, which is used for the services definition, and consequently assures "common language" used by all services invocations. In a SOA implementation where the focus is agility and the disparate databases are apt to evolve and/or consolidated a full-fledged database federation with a management system may be overkill. Such a scenario is mergers and acquisitions: at first there are redundant and dispersed data sources from more than one organization, which must be consolidated with time. Federation can speed up time-to-market, however after consolidation of the master data there are much less data sources left to federate. A second such scenario is permanently occurring in IT outsourcing business: with each new customer or new service there are dispersed data sources of other organizations to be integrated into service delivery. Some data can or must be consolidated whereas some data or complete data sources are in the reign of the customer company. Having data federation again speeds up time-to-market, however, the IT outsourcing has very transient characteristics. Data and data sources move and evolve quickly according to the pace of service delivery.

In both scenarios data federation among disparate data sources exhales time-to-market and enables a real-time view of the enterprise data. However, the duration and amount of data to be federated depends on the consolidation possibilities. Hence, a full-fledged database federation management system represents a fix cost to remedy the most extreme case of dispersed data sources - and remains at the fix federation capacity setup even when some of the data sources are consolidated. In a SOA implementation where agility is the reason d'etre the current state of the art misses an agile method of transiently federating the dispersed data sources until they are consolidated and at the same time without breaking the service autonomy design principle for a successful SOA

A further embodiment of the invention is that the common information model is derived from an enterprise business model used by the application service. A common information model provides a unique application independent interface for a user and for applications. If the common information model is derived from an enterprise business model used by the application services of the distributed software system the acceptance for the user is increased since the common information model has a similar structure and terminology as the underlying enterprise business model.

A further embodiment of the invention is that the federation process is implemented as part of a middleware platform. A middleware platform presents a layer in a complex software system and provides interfaces and services for software components of the software system. Especially for communication within distributed software systems and applications middleware platforms (e.g. CORBA, DCOM, .NET) support developers and users of the software system. If the federation process is part or is implemented as part of a middleware platform the efficiency (e.g. response time) of a federated query will be increased.

Another aspect of the present invention is a computer readable medium, having a program recorded thereon, wherein the program when executed is to make a computer execute the method steps:
normalizing and mapping descriptions of application data for application services of a distributed software system into a common information model, wherein the distributed software system comprises local data bases providing the application data represented in a local data schema;
initiating a federation process adapted to accept a query of an application service to the common information model;
locating the application data belonging to the query of an application service into the respective local data base by the federation process;
mapping the application data belonging to the query from the common information model representation into the local data schema of the respective local data base, wherein the mapping is performed by the federation process;
responding to the query in the respective local data schema of the respective local data base;
receiving the response to the query by the federation process;
remapping of the application data of the query from the respective local data schema into the common information model representation by the federation process; and
responding to the query of the application service in accordance with the common information model representation by the federation process. The computer readable medium or storage medium may be a built-in medium installed inside a computer device main body or a removable medium arranged so that it can be separated from the computer device main body. Examples of the built-in medium include, but are not limited to, rewriteable non-volatile memories and flash memories, and hard disks. Examples of the removable medium include, but are not limited to, optical storage media such as CR-ROMs and DVDs; magneto-optical storage media, such as MOs; magnetism storage media, including but not limited to floppy disks, cassette tapes, and removable hard disks; media with a built-in rewriteable non-volatile memory, including but not limited to memory cards; and media with a built-in ROM, including but not limited to ROM cassettes; etc. Furthermore, various information regarding application data, application services, or common information models may be stored in any other form, or it may be provided in other ways.

A further aspect of the present invention is a system for federating application data for application services in a distributed software system comprising local data bases providing the application data, wherein a local data base having a local data schema, the system comprising:
a normalizing unit for normalizing and mapping the descriptions of the application data in a common information model representation; and
a federation unit
   - for accepting a query of an application service in the common information model;
   - for locating the application data belonging to the query of an application service into the respective local data base;
   - for mapping the application data belonging to the query from the common information model representation into the local data schema of the respective local data base,
   - for receiving the response to the query provided by the respective local data base;
   - for remapping of the application data of the query from the respective local data schema into the common information model representation; and
   - for responding to the query of the application service in accordance with the common information model representation. The system can be implemented with commercial off the shelf hardware and software. As hardware can be used commercially available computers (e.g. Workstations, Personal Computers) with input means (keyboard, mouse, etc.), output means (monitor, display, printer, etc.) and data storage means. The software can be implemented using commonly known programming languages (e.g. C, C++, Java). The system can also be implemented as a web service or by means of cloud computing.

A further embodiment of the invention is that the federation unit is implemented as a federation process of a middleware platform. If the federation unit is part of a middleware platform, the efficiency of the query will increase especially regarding the response time.

A further embodiment of the invention is that the communication to the local data bases is accomplished by a middleware platform or via remote procedure call. This increases the flexibility of implementing the inventive system since message oriented communication or function call oriented communication can be used among others.

### Brief description of the drawings

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- Figure 1: shows an exemplary abstract Federated Data Base Systems (FDBD) architecture,
- Figure 2: shows an exemplary schematic overview diagram illustrating the implementation of the invention in a light weight execution environment,
- Figure 3a: shows an exemplary sequential federated query,
- Figure 3b: shows an exemplary parallel federated query,
- Figure 4: shows a schematic overview diagram of an example of federation with a process
- Figure 5: shows an example of reusable access definitions to disparate remote data sources in pseudocode, and
- Figure 6: shows an example for the mapping between local data sources and the common information model.

### Description of the preferred embodiments

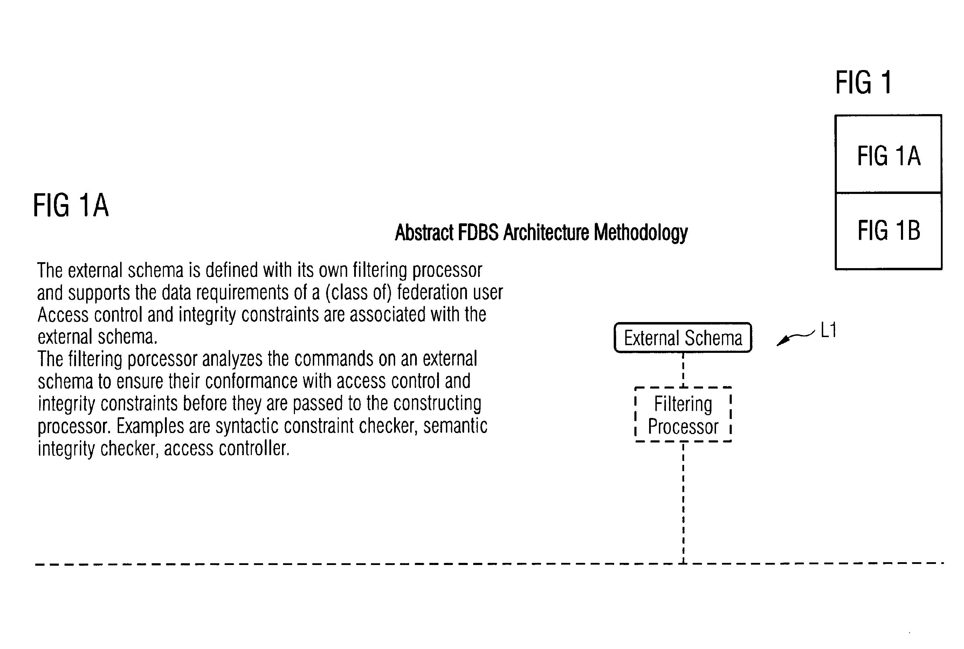

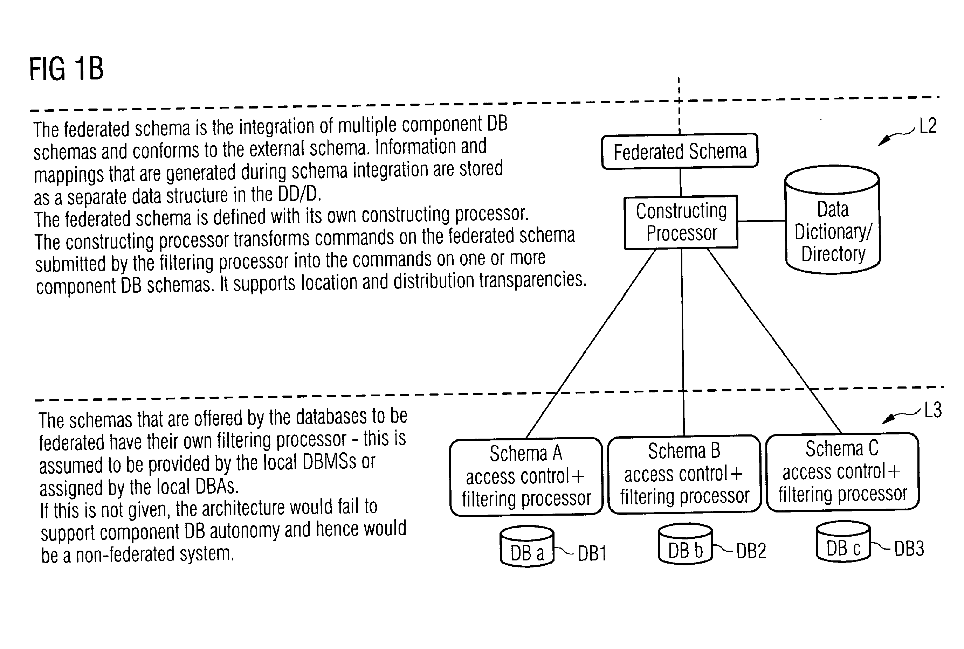

It will be readily understood that the components of the present invention, as generally described and illustrated in the Figures herein, may be arranged and designed in a wide variety of different configurations. Thus, the following more detailed description of the embodiments of the present invention, as represented in Figures 1 through 6, is not intended to limit the scope of the invention, as claimed, but is merely representative of selected embodiments of the invention.

Agile, especially distributed software systems with a high rate of acquisitions and divestures of software components (e.g. by means of mergers and acquisitions of companies) or typical service oriented architecture (SOA) implementations still require solving the following data access issues:
**●** Consolidation of data between multiple applications: Today's enterprise data is typically scattered between multiple isolated applications. Every application contains only a subset of the enterprise data, dedicated to the problem that the application is trying to solve and the data is often duplicated between applications. This data redundancy between applications creates an inaccurate representation of enterprise data and requires periodic data synchronization between applications, each of which is often considered to be a "master" data store for particular functionality/unit. In addition, data representations themselves are different between different applications. As a result, it is often difficult to reconcile data representation between individual applications. As the individual applications evolve independently, the complexity of the problem increases.
**●** Update of dispersed data: Since the SOA implementation is attempting to represent enterprise-wide functionality, it needs to operate based on a well-defined enterprise data model. Data access from service implementations is required to correctly align and consolidate data from multiple existing applications and ensure propagation of data changes to all applications, using this data.
**●** Ownership of enterprise data by services: Since services encapsulate enterprise functionality and hide the data behind service interfaces, there is an uncontrolled level of data ownership.
**●** Interface definitions: Because service invocations are always remote, service design strives towards large granularity interfaces, aiming at minimizing of the amount of service traffic between service consumers and providers of the service. Data access, on the other side, can require both high and fine granularity of interfaces, depending on the data access requirements.

Data access typically implements pure CRUD (Create, Read, Update, and Delete) whereas enterprise services implement business meaningful interface, like rate policy, etc.

As the scope of SOA implementations expands from departmental implementations to enterprise-wide undertaking the issues of enterprise data access quickly become the most important implementation issues.

There are some approaches resolving these issues:

### 1. Aligning enterprise data support with the business services:

In this approach or pattern enterprise data access is incorporated in the business service implementation. Service implementations themselves are responsible for defining and supporting rules for validation, storing and retrieving a particular data set.

The advantage of this approach or design pattern is that it is well aligned with the overall service implementation approach.

The disadvantages are:
■ In addition to the business logic functionality of the service, service implementation must support all of the data validation and access and coordination logic.
■ Sharing enterprise data between multiple enterprise business services requires additional design considerations and typically leads to additional coupling between enterprise services. If multiple services need an access to the same piece of enterprise data further patterns must be realized:
   - Duplicating of data access logic between multiple services. This requires duplication of the data access, transformation and synchronization logic between multiple service implementations.
   - Extending interfaces of a particular service to include CRUD methods for manipulation of the data controlled by the service. This approach leads to decreasing of the service granularity and diminish business meaning of the service methods. It creates additional dependencies between enterprise services, breaking their autonomous nature.

### 2. Federated Database Management System

Another approach to enable a real-time unified enterprise data view for the services is to federate the dispersed and autonomous data sources via a Federated Database Management System. There are powerful FDBMS products such as the IBM InfoSphere™ on the market. However, the approach taken in FDBMS is completely centered around database interoperability.

In a SOA implementation where the focus is agility and the disparate databases are apt to evolve and/or consolidated a full-fledged database federation with a management system may be overkill. Such a scenario is mergers and acquisitions: at first there are redundant and dispersed data sources from more than one organization, which must be consolidated with time. Federation can speed up time-to-market, however after consolidation of the master data there are much less data sources left to federate. A second such scenario is permanently occurring in IT outsourcing business: with each new customer or new service there are dispersed data sources of other organizations to be integrated into service delivery. Some data can or must be consolidated whereas some data or complete data sources are in the reign of the customer company. Having data federation again speeds up time-to-market, however, the IT outsourcing has very transient characteristics. Data and data sources move and evolve quickly according to the pace of service delivery

In both scenarios data federation among disparate data sources exhales time-to-market and enables a real-time view of the enterprise data. However, the duration and amount of data to be federated depends on the consolidation possibilities. Hence, a full-fledged database federation management system represents a fix cost to remedy the most extreme case of dispersed data sources - and remains at the fix federation capacity setup even when some of the data sources are consolidated.

In a SOA implementation where agility is the reason d'etre the current state of the art misses an agile method of transiently federating the dispersed data sources until they are consolidated and at the same time without breaking the service autonomy design principle, for a successful SOA

The presented invention overcomes the above mentioned issues. In the inventive approach the enterprise data access is not implemented as a business service encapsulating the data access logic. We introduce a process middle layer along which the data access logic, such as transformations against a common module and CRUD (Create, Read, Update, and Delete) is implemented. The business services access the results of a federation process as if it is a common data layer.

In this way the invention provides clean and unified view to the enterprise data for business services. Services in the SOA only represent enterprise functionality and are not further diminished in granularity, business logic and independency. The clear separation of data access fine granularity design and the service implementation business level granularity design enables clean, extendible and flexible SOA implementations. The disadvantages of the approach in 2(b) are completely remedied. The characteristics and granularity of business services and their autonomy is fully preserved whilst still providing real-time unified data conforming to the enterprise common data model.

The invention further conforms to database federation methodology, without the need to setup a federation server sized to cope with the worst case amount of dispersed data sources. The invention can scale up or down depending on the transience of the need for federation because it is completely based on federation as a process.

The main difference to a full-fledged federated database management system (FDBMS) is that there is no dedicated database management system tied to a specific hardware setup. In an FDBMS the federation database includes a dedicated management system that controls the federated query execution and the presentment (UNION, JOIN...) of the returned results from the dispersed databases. This notion is the same as in local database management systems, which control the local query execution and the presentment of the locally computed results.

In the invention federation is realized as a process. This federation process controls the federated query execution and the presentment of the results returned from remote sources. A process step either defines the query to one remote source or the presentment of the result set returned from the remote source. The entire process with the transition links from one process step to the next represents the federated query execution. At each transition link rules may be added to control the presentment of the result set of one execution step as input into the next execution step.

Figure 1 shows an exemplary abstract Federated Data Base Systems (FDBS) architecture. Federated Data Base Systems show a tendency to be clumsy, inflexible and not efficient in agile software environments. In a Federated Data Base System a federation layer (federated schema) of software is added above existing Data Base Managing Systems (DBMS) to enable federation. This federation approach offers a preferred evolutionary path:
- continuous operation of existing applications remain unchanged,
- preserves most of the logical organizational structure,
- supports controlled integration of existing databases,
- facilitates incorporation of new applications and new databases

As old (e.g. legacy) applications are modified the component databases may be consolidated and redundant data may be removed (if not required for improving availability through locality). New applications may be developed using the Enterprise Information Model, which is the external schema imposed on the federated schema.

Figure 1 illustrates an abstract FDBS architecture comprising an external layer L1, a federation layer L2 and a local layer L3 for local data bases DB1 - DB3. The external schema is defined with its own filtering processor and supports the data requirements of a (class of) federation user. Access control and integrity constraints are associated with the external schema. The filtering processor is for analyzing the commands on the external schema to ensure their conformance with access control and integrity constraints before they are passed to the constructing processor. Examples of a filtering processor, are syntactic constraint checker, semantic integrity checker, access controller.

The federation layer L2 comprises a federated schema and a constructing processor connected to a data dictionary/directory (DD/D). The federated schema is the integration of multiple component data base schemas and conforms to the external schema. Information and mappings that are generated during schema integration are stored as a separate data structure in the DD/D. The federated schema is defined with its own constructing processor. The constructing processor transforms commands on the federated schema submitted by the filtering processor into the commands on one or more component DB schemas. It supports location and distribution transparencies.

The local layer L3 comprises local data bases DB1 - DB3 and respective data schemata. The schemas that are offered by the databases to be federated have their own filtering processor - this is assumed to be provided by the local DBMSs or assigned by the local data bases DB1 - DB3. If this is not given, the architecture would fail to support component (e.g. data base) DB1 - DB3 autonomy and hence would be a non-federated system.

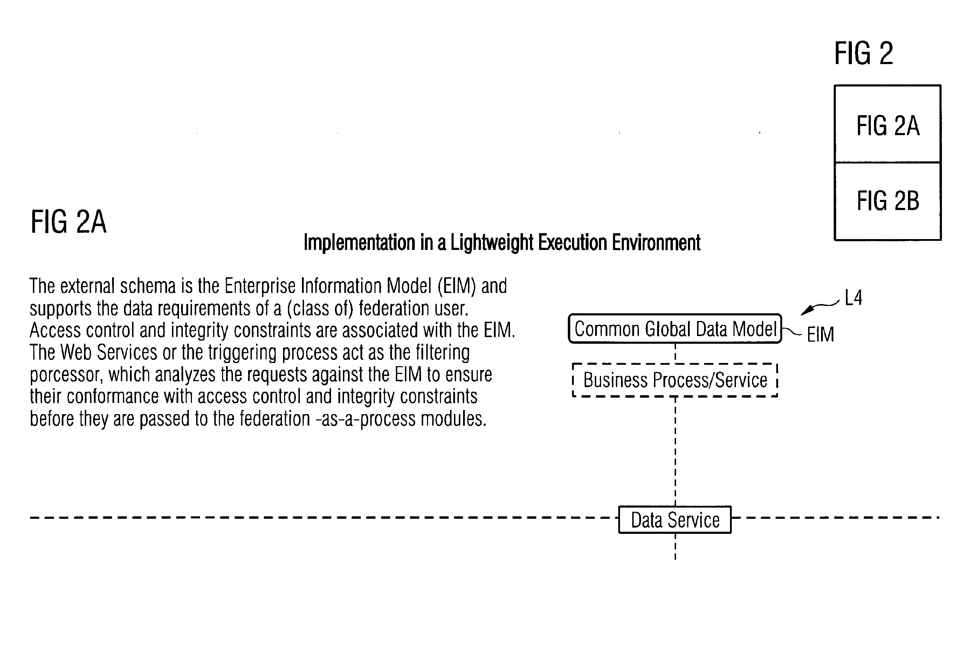

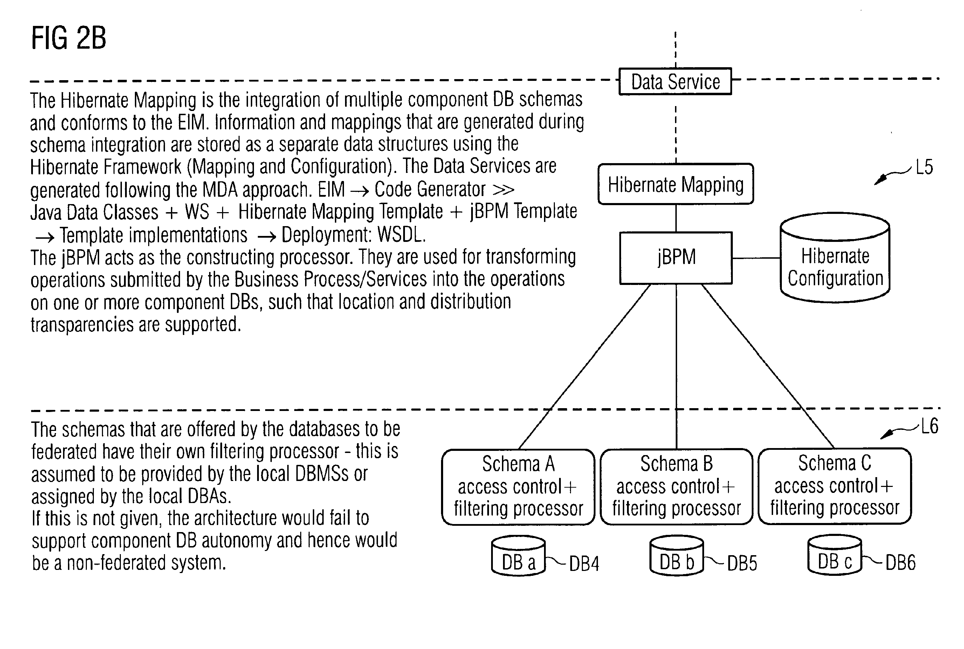

Figure 2 shows an exemplary schematic overview diagram illustrating the implementation of the invention in a light weight execution environment. As mentioned above the invention implements federation as a dedicated software federation process and not as a software layer in a FDBMS. The federation process can be implemented as a lightweight process or in a lightweight execution (runtime) environment. Figure 2 illustrates an exemplary implementation approach for a federation process in a lightweight execution (runtime) environment. The lightweight execution (runtime) environment comprises a common global data layer L4, a hibernate layer L5 and a local layer L6 for access to local data bases DB4 - DB6.

In the common global data layer L4 the external schema is the Enterprise Information Model (Common Global Data Model or Common Information Model) EIM which supports the data requirements of a (class of) federation user. Access control and integrity constraints are associated with the Enterprise Information Model (Common Global Data Model or Common Information Model) EIM. The Web Services or the triggering process act as the filtering processor, which analyzes the requests against the Enterprise Information Model EIM to ensure their conformance with access control and integrity constraints before they are passed to the federation-as-a-process modules.

The Hibernate Mapping (hibernate layer L5) is the integration of multiple component or data base schemas and conforms to the Enterprise Information Model EIM. Information and mappings that are generated during schema integration are stored as separate data structures using the Hibernate Framework (Mapping and Configuration). The Data Services are generated following the MDA (Model Driven Architecture) approach: Enterprise Information Model EIM →Code Generator → Java Data Classes + WS + Hibernate Mapping Template + jBPM Template → Template implementations → Deployment: WSDL (Web Services Description Language). The jBPM (platform developed by JBoss for executing workflows specified by business process languages, e.g. jPDL, BPEL or Pageflow) acts as the constructing processor. They are used for transforming operations submitted by the Business Process/ Services into the operations on one or more component data base DB4 - DB6, such that location and distribution transparencies are supported.

In the local layer L6 the schemas that are offered by the databases to be federated have their own filtering processor - this is assumed to be provided by the local DBMS DB4 - DB6 or assigned by the respective local data base access or application. If this is not given, the architecture would fail to support component DB autonomy and hence would be a non-federated system.

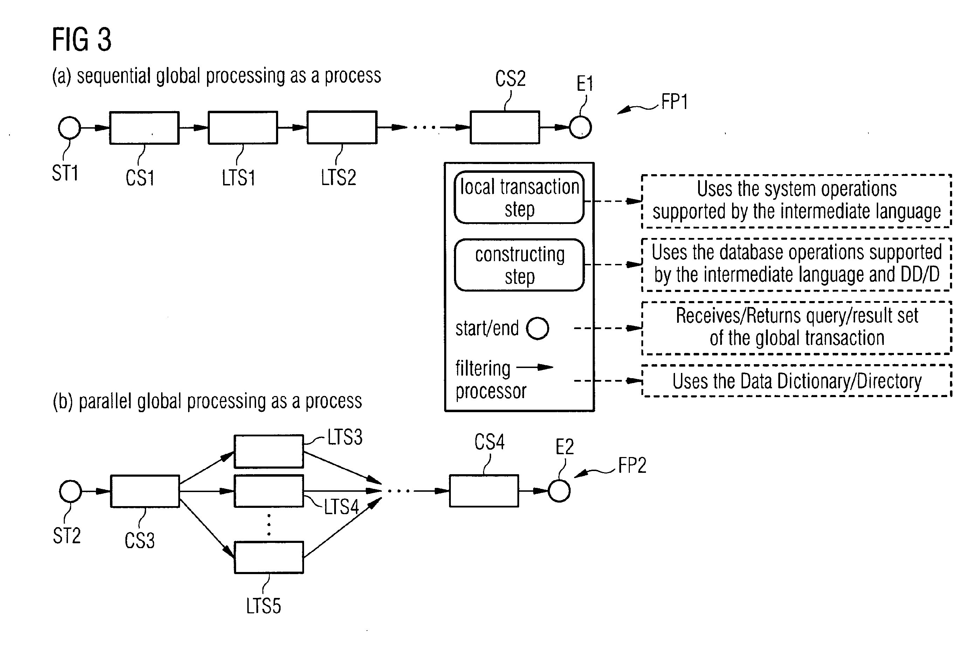

Figure 3a shows an exemplary sequential federated query FP1 and figure 3b shows an exemplary parallel federated query FP2. Figures 3a and 3b represent examples of global query processing with the Federation-as-a-Process method. Query evaluation/execution plan is defined as a lightweight process (constructing processor). The different possibilities of executing a federated query are expressed as process steps CS1 - CS4 (constructing step), LTS1 - LTS5 (local transition step) within a process FP1, FP2. As shown in Figures 3a and 3b both parallel and sequential execution of a federated query can also be realized using the process specification techniques. Federation as a process is very similar to the graphical representation execution plan a federated database management system uses to execute federated queries.

The start ST1, ST2 represents an incoming query for specific data. In this way, the federated query is hidden from the query originator. When the federated query completed execution and the result set presentment is handled accordingly the end point E1, E2 returns the result set. For the query originator start ST1, ST2 and end point E1, E2 are transparently handled according to the request/response mechanism.

Each step CS1 - CS4 (constructing step), LTS1 - LTS5 (local transition step) of the process FP 1, FP2 that represents a remote query - a query sent to a remote database to be executed locally - is a sub-query of the federated query. Hence each process step CS1 - CS4 (constructing step), LTS1 - LTS5 (local transition step) has the logic to access the specific remote source, including credentials and conformance to the security policy of the specific data source. Additionally, each includes the part of the federated query to be locally executed by that specific remote source and a buffer for the remotely fetched result set (along with the fetch logic).

Each transition step LTS1 - LTS5 may impose rules on how the result set fetched in one process step is to be transformed as an input to the next process step. Rules may be typical DB filter functions on the partial result sets such as SORT. A local transition step LTS1 - LTS5 uses the system operations supported by the intermediate language (e.g. business process languages like jPDL, BPEL or Pageflow). A constructing step CS 1- CS4 uses the database operations supported by the intermediate language and the Data Dictionary / Directory DD/D. Starting points ST1, ST2 and end points E1, E2 receive/return query/result set of the global transaction. The filtering processor presented as arrows in figures 3a and 3b uses the Data Dictionary/Directory DD/D.

Operators and functions on the entire result set of the federated query, such as UNION, are performed as a final process step before the results of the federated query are sent for presentment to the end point.

The logic of how the federated query is to be sent to the remote sources is realized in a model-driven way: The Business Integration Engineer determines the enterprise common model at design-time. The task of a data architect is to create mappings between local data schemas to the enterprise common model at the technical implementation level. These mappings are semantic meta-information that only humans can generate with certainty. They can be supported by tools or some degree of automation with an inference algorithm. In the most basic scenario, the data architect needs to decide how to map customer_number from source A, in which it means the household number and customer number from source B in which it is the social security number.

Once the mapping is generated, however, the federation as a process can utilize solely this meta-information to determine which remote sources are to be accessed and how the transformation conforming to the enterprise common model within the result set from each remote query is to be carried out via transition rules. If the result set of one remote query is not to be transitioned as input into another remote query, then the start point automatically parallelizes the sub-queries to the remote destinations.

The data base access to a specific remote data source can be factored out for reuse by any process step of the federation. In this way the access logic is not redundant in each process step, but can be utilized on-the-fly by means of code injection or some other means. The CRUD (Create, Read, Update, and Delete) on each specific data source can also be automatically generated such that the development effort is further decreased. The access and query logic in the process steps that are immutable can be factored out and parameterized to realize further reduction of development effort. Furthermore the inventive approach supports automated implementation of search methods, wherein a data base query is automatically created for assigned search criteria for the respective attributes of the underlying data model. The inventive approach also supports variants and subsets of a data model containing only an extract of a superordinate data model.

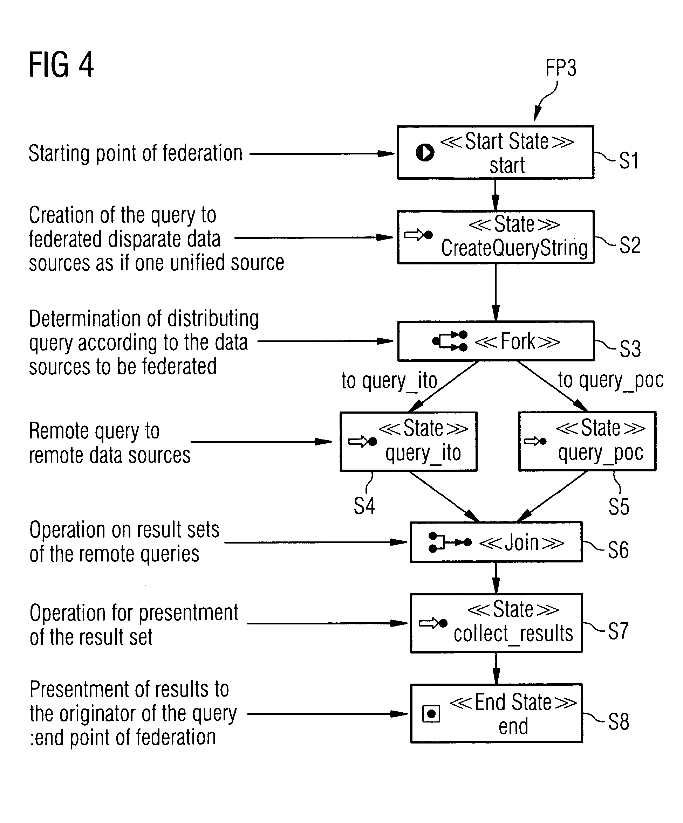

Figure 4 shows a schematic overview diagram of an example of federation-as-a-process FP3 using a global query processing JBoss Implementation. Step S 1 represents the starting point of federation. In step S2 the query to federated disparate data sources is created (incarnated). In step S3 a new child process is created by the fork symbol. This means that federation-as-a-process is supporting multi threading or multi tasking of processes in the software system. In step S3 the determination of distributing query according to the data sources to be federated is accomplished. Steps S4 and S5 represent remote queries to remote data sources (e.g. local data bases). In step S6 the results of the remote queries will be synchronized. In step S7 the presentment of the result set is prepared and arranged. In step S8 the presentment of results to the originator of the query (end point of federation) is performed.

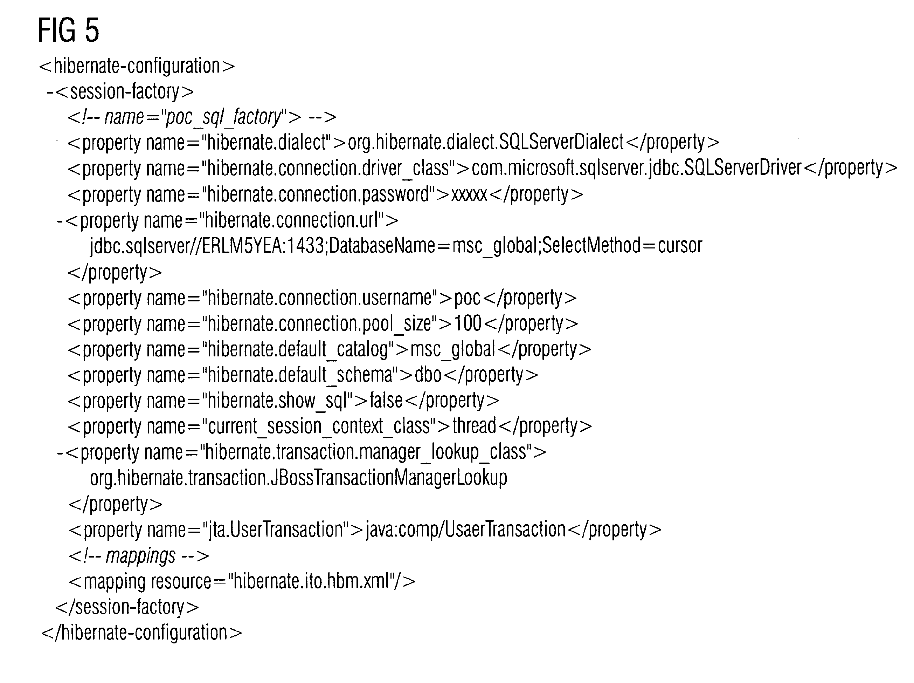

Figure 5 shows an example of reusable access definitions to disparate remote data sources in pseudocode notation.

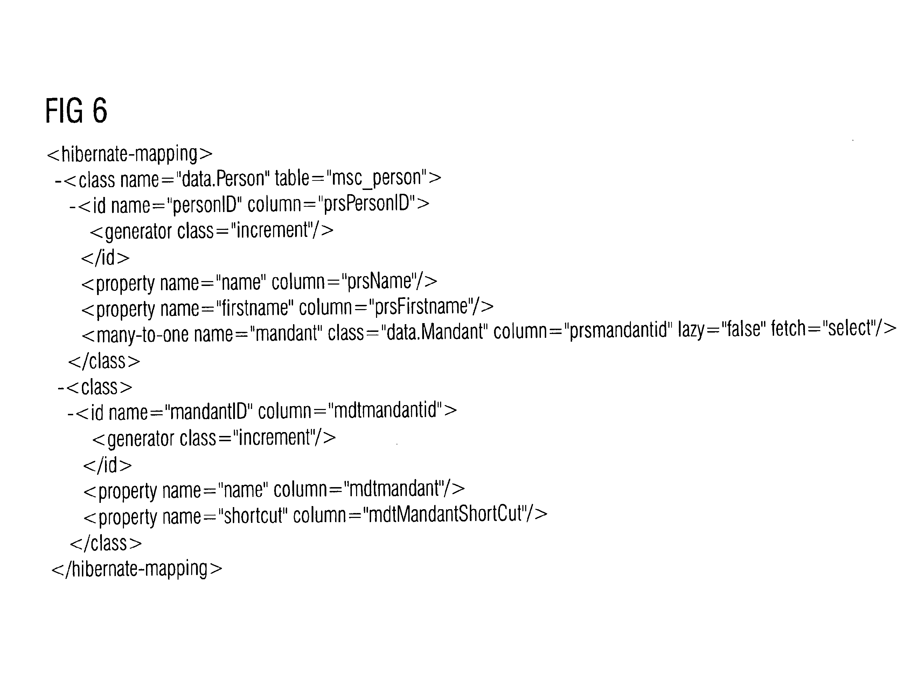

Figure 6 shows an example for the mapping between local data sources and the common information model in pseudocode notation.

The invention allows federation without the need for a dedicated full-fledged management system or dedicated databases to manage the federation information. In contrast to other forms of data integration the data need not be replicated and is still available in the format corresponding to an enterprise common model in real-time as it is otherwise only possible with a federated data base management system (FDBMS). The solution is independent of hardware and application and can be deployed anywhere in the enterprise, migrated on demand or replicated to allow real-time federation of dispersed data where it is needed. This allows the federation solution to scale up or down depending on the need for federation (amount of dispersed data sources and locations/applications). Multiple instances of the solution can be set up at sources near the federation hot spots, e.g. geographical or organizational units which are currently undergoing a scenario similar to M&A or setting up new service delivery points with new customers.

The virtualization from a specific environment allows the solution scalability and flexibility - both very important to the success of service oriented architectures (SOA) and agile organizations. Components of the solution can be integrated into a development environment to enhance the productivity of the data base administrators (DBAs) and reduce the cost of maintenance if those DBAs otherwise would need to maintain additional databases for the federation meta-data. The solution can be realized in a model-driven way, such that the technical implementation of the common model is realized through the federation process. This flexibility adds up to the aligning of enterprise data with the enterprise common model.

The federation as a process solution effectively creates data abstraction conforming to the enterprise common model, shielding business functionality from the actual details of enterprise data access. Explicit separation of concerns between implementation of the service functionality (business logic) and the dispersed data support logic allows for the delivery of robust business services in an evolving enterprise data environment. In an agile organization in which business evolves fast those data details do almost always not conform to the common model for a transient period of time until the evolving business is aligned with the core business. Allowing for correct and real-time operation in these transitions can spare valuable time-to-market. At the same time no counterproductive investments need to be maintained that are not in synch with the long-term goal of a company to act upon consolidated enterprise information.

Through encapsulation of all the access to enterprise data and transformation logic to enforce conformance to the enterprise common model, the federation process provides a single place for all of the transformations between enterprise common data model and the data models of the enterprise applications, which may be siloed. Because any service implementation has an access to any of the enterprise data that it requires, the solution significantly reduces the coupling between services. Service invocations contains only references to a common data model, which change extremely rarely, while the actual data access is handled as a flexible federation process that can handle evolving and disparate data sources. This also means that if a service implementation needs additional information for its processing, it can access it without impacting its consumers by having to handle data access logic for different data sources.

The disparate data is turned into logical modules each with a standards-based interface, which very much conforms to the principles of a SOA without burdening the service implementation. It enables users to access and use the services more easily, improves data visibility and promotes even greater reuse. Additionally, methods for scaling the federation process can be introduced without affecting the business service implementations.

Further advantages of the federation-as-a-process approach:
- The federation-as-a-process allows for streamlining the federation development; if deployed as a semi-automated framework or along with a developer guideline, it can considerably reduce nonconformity.
- Recurring process steps and the associated code can be reused, hence federation-as-a-process allows for future automation.
- The process execution can be logged, however the logging mechanism must not be a bottleneck. Future development can use such lightweight persistency for global transaction rollback according to the X/A specification.
- The federation-as-a-process can be instantiated anywhere near the federation hotspots, however it is crucial that all the information is interlinked and up-to-date, i.e. via a federation development repository.
- The federation developers need to follow the same guideline.

On the other hand the federated data base system (FDBS) development is static, at run-time only the information provided during development can be utilized - unless the process steps are made parameterizable and meta-information is made dynamically accessible.

For common cases (standard configurations, e.g. just a single data base is involved) only the hibernate mapping file (see FIG 2 and FIG 6) has to be adjusted by using the federation-as-a-process approach.

Global processing optimization will be the asset of further development. Global optimization involves evaluating the following trade-offs:
- The amount of work done by the GDM (Global Data Manager, i.e. the constructing processor) and the complexity of the LDI (Local Database Interface), and
- The amount of communication and processing done by different component DBS

The federation-as-a-process approach can be realized fully automated or semi-automated. The federation-as-a-process approach with the maximum amount of automation possible, e.g.
- parameterizable process steps
- dynamic access to meta-information, both schema-related and schema independent
enables an appropriate level of automation in the IT Services delivery by allowing data sources to be usable immediately instead of setting up heavy integration projects.

The semi-automated federation-as-a-process can be realized as an alternative to both
- time-intensive data integration common in traditional IT Services, which needs centralizing the data before applications can productively utilize the information, and to
- on-the-fly data access common in cloud computing, which needs the data be stored in special data structures (mostly non-relational, key/value stores rather similar to object-oriented data base).

These advantages provide flexibility directly to the organization itself. It can reorganize without affecting business service constructions. Changing the structure of an organization without changing the delivered business services is a promise needed by next generation outsourcing.

A computerized method, system and computer readable medium for federating application data for application services in a distributed software system comprising local data bases providing the application data, wherein a local data base having a local data schema and wherein the federation is accomplished by a federation process, advantageously a lightweight process. This federation-as-a-process approach is especially useful in agile software environments (facing a high rate of mergers and acquisitions) and in service oriented software architectures (SOA).

### Reference Numbers

- L1 -L6: Layer
- DB1 - DB6: Local Data Base
- EIM: Enterprise Common Information Model
- FP1 - FP3: Federation Process
- S1 - S8: Process Steps
- ST1, ST2: Starting Point
- CS1 - CS4: Constructing Step
- E1, E2: End Point
- LT1 - LT5: Local Transaction Step

## Claims

1. A method for federating application data for application services in a distributed software system comprising local data bases providing the application data, wherein a local data base (DB1 - DB6) having a local data schema, the method comprising the following steps:
normalizing and mapping the descriptions of the application data in a common information model representation (EIM), wherein a federation process (FP1 - FP3) is adapted to accept a query of an application service to the common information model (EIM);
locating the application data belonging to the query of an application service into the respective local data base (DB1 - DB6) by the federation process (FP1 - FP3);
mapping the application data belonging to the query from the common information model representation (EIM) into the local data schema of the respective local data base (DB1 - DB6), wherein the mapping is performed by the federation process (FP1-FP3);
responding to the query in the respective local data schema of the respective local data base;
receiving the response to the query by the federation process (FP1 - FP3);
remapping of the application data of the query from the respective local data schema into the common information model representation (EIM) by the federation process (FP1 - FP3); and
responding to the query of the application service in accordance with the common information model representation (EIM) by the federation process (FP 1 - FP3).

2. The method according to claim 1, wherein the federation process (FP1 - FP3) is implemented as a lightweight process.

3. The method according to one of the preceding claims, wherein the federation process (FP1 - FP3) controls the query execution and the presentment returned by the local data base (DB1 - DB6).

4. The method according to one of the preceding claims, wherein the query generated by the federation process (FP1 - FP3) is a sequential federated query or a parallel federated query.

5. The method according to one of the preceding claims, wherein the distributed software system is a cloud computing system.

6. The method according to one of the preceding claims, wherein the distributed software system is implemented according a service oriented architecture.

7. The method according to one of the preceding claims, wherein the common information model (EIM) is derived from an enterprise business model used by the application service.

8. The method according to one of the preceding claims, wherein the federation process (FP1 - FP3) is implemented as part of a middleware platform.

9. A computer readable medium, having a program recorded thereon, wherein the program when executed is to make a computer execute the method steps:
normalizing and mapping descriptions of application data for application services of a distributed software system into a common information model (EIM), wherein the distributed software system comprises local data bases (DB1 - DB6) providing the application data represented in a local data schema;
initiating a federation process (FP1 - FP3) adapted to accept a query of an application service to the common information model (EIM);
locating the application data belonging to the query of an application service into the respective local data base by the federation process (FP1 - FP3);
mapping the application data belonging to the query from the common information model representation (EIM) into the local data schema of the respective local data base (DB1 - DB6), wherein the mapping is performed by the federation process (FP1 - FP3);
responding to the query in the respective local data schema of the respective local data base (DB1 - DB6);
receiving the response to the query by the federation process (FP1 - FP3);
remapping of the application data of the query from the respective local data schema into the common information model representation (EIM) by the federation process (FP1 - FP3); and
responding to the query of the application service in accordance with the common information model representation (EIM) by the federation process (FP1 - FP3).

10. A system for federating application data for application services in a distributed software system comprising local data bases providing the application data, wherein a local data base (DB1 - DB6) having a local data schema, the system comprising:
a normalizing unit for normalizing and mapping the descriptions of the application data in a common information model representation (EIM); and
a federation unit (FP1 - FP3)
- for accepting a query of an application service in the common information model (EIM);
- for locating the application data belonging to the query of an application service into the respective local data base (DB1 - DB6);
- for mapping the application data belonging to the query from the common information model representation (EIM) into the local data schema of the respective local data base,
- for receiving the response to the query provided by the respective local data base (DB1 - DB6);
- for remapping of the application data of the query from the respective local data schema into the common information model representation (EIM); and
- for responding to the query of the application service in accordance with the common information model representation (EIM).

11. The system according to claim 10, wherein the federation unit is implemented as a federation process (FP1- FP3) of a middleware platform.

12. The system according to claim 10, wherein the communication to the local data bases (DB 1 - DB6) is accomplished by a middleware platform or via remote procedure call.
